# EUROPEAN PATENT SPECIFICATION

(11) **EP 1 800 905 B1**
(45) Date of publication and mention of the grant of the patent: **17.10.2012**
(21) Application number: 06256065.1
(22) Date of filing: 28.11.2006
(51) Int. Cl.: B60C 9/28, B60C 3/00

(54) **Pneumatic radial tire for airplanes**
Pneumatischer Radialflugzeugreifen
Pneumatique radial pour avions

(30) Priority: 21.12.2005 JP 2005368276
(43) Date of publication of application: 27.06.2007
(73) Proprietor: Bridgestone Corporation, Tokyo 104-8340 (JP)
(72) Inventor: Itai, Seiji c/o Bridgestone Corp. Technical Center, Tokyo 187-8531 (JP)
(74) Representative: Oxley, Robin John George

(56) References cited:
- US-A- 5 616 195
- US-A1- 2005 194 081

## Description

This invention relates to a pneumatic radial tire for an airplane, and more particularly to an airplane tire having a higher durability by improving the resistance to uneven wear of the tire.

As one of performances required in a radial tires for airplanes is mentioned a force resisting to foreign matter, i.e. a cut-resistant durability. In the airplane tire, it is a very important issue to improve the cut-resistant durability because there is a serious problem that burst or peel-off may be caused by riding on foreign matter and an airframe may be damaged by broken pieces of the tire.

For improving the cut-resistant durability, it is known that it is particularly useful to suppress the size growth of the tire.

Recently, airframe makers have proposed to reduce the weight of the airframe as far as possible for reducing the fuel consumption of the airplane, and hence weight reduction of the tire is required.

It is very difficult to satisfy such a requirement by the conventional technique, so that it is demanded to develop tires by using a new technique.

There are developed tires in which Kevlar cords having a higher strength are used instead of nylon cords in the airplane tire for suppressing the size growth and decreasing the number of belt layers (see, for example, WO 2003/061991). Further, it becomes clear from recent examination results that a tire provided with a main belt having a structure that a belt cord is spirally and continuously wound at an angle of approximately 0° with respect to a rotating direction of the tire from a winding start to a winding end and wherein a gauge distribution is made smaller from a central portion toward a belt end portion (hereinafter referred to as a convex structure) is effective as a new technique capable of realizing the weight reduction of the tire (particularly weight reduction of a shoulder portion) while more suppressing the size growth.

In the tire using the Kevlar cord, however, there is a limit in the improving effect. In the tire provided with the main belt of the convex structure, it is an actual state that a ground contacting shape (foot print) formed by pushing the tire onto a flat plate under a normal internal pressure and a normal load becomes not favourable.

In order to render the ground contacting shape into a rectangular form, it is generally effective to make an outer surface of a tread flat to make small a size difference between the central portion and the shoulder portion in the tire, whereby an adequate rectangle ratio can be obtained. In the tire provided with the main belt of the convex structure, however, the number of belt layers is less in the shoulder portion than in the central portion (the rigidity in the circumferential direction of the belt is smaller in the shoulder portion than in the central portion), so that if the outer surface of the tread is made flat, the belt is stretched in the shoulder portion to make the ground contacting length longer and hence the ground contacting shape becomes rendered into a butterfly form. Such a ground contacting shape brings about heat generation at the shoulder rib during running, which results in a large deterioration of high-speed durability.

In order to avoid the formation of the butterfly type ground contacting shape and suppress the size growth of the tire, it is effective to make a crown shape provided on the outer surface of the tread smaller than that of the conventional structure, whereby a global rectangle ratio (ground contacting length of shoulder rib/ground contacting length of center rib) can be rendered into a target value. However, even if a small crown form is simply provided, a local rectangle ratio (ratio of ground contacting length of outside to inside in the shoulder rib) becomes small, so that the ground contacting shape becomes inadequate at a ground contacting end portion of the tire and there is a fear of causing the uneven wear at the shoulder rib.

It is, therefore, an object of the invention to solve the above conventional problems and to propose a radial tire for an airplane capable of improving the resistance to uneven wear to enhance the tire durability.

According to the invention, there is provided a pneumatic radial tire for an airplane comprising a pair of bead cores, a carcass comprised of at least one carcass ply toroidally extending between the pair of the bead cores, a main belt disposed on a radially outer peripheral face of a crown portion of the carcass and comprised of at least two belt layers each being formed by spirally winding rubberized inextensible high-rigidity cord(s), an auxiliary belt disposed radially outside of the main belt and comprised of plural layers each being formed by bending a ribbon-shaped treat of rubberized nylon cords on a same plane in opposite directions between both ends and zigzag extending in a circumferential direction, and a tread disposed radially outside of the auxiliary belt, wherein the main belt has a lamination thickness gradually decreasing from a widthwise center of the tire toward an end portion thereof and satisfies a condition of 0.2 s G₁/G₀ ≤ 0.8 when a lamination thickness at the widthwise center of the tire is Go and a lamination thickness at a position corresponding to 2/3 of a maximum width of the main belt is G₁; and
the tread satisfies a condition of 0.85 ≤ D_{S}/D_{C} ≤ 1.1 when a tread thickness at a widthwise center position of the tire is D_{C} and a tread thickness at a position of a width corresponding to 80% of a maximum width of the main belt is D_{S}; and
an outer surface of the tread formed by filling a normal internal pressure has a radius of curvature satisfying a condition of 0.4 ≤ R₂/R₁ ≤ 3.0 when a radius of curvature in a central region including the widthwise center of the tire is R₁ and a radius of curvature forming a widthwise side region outward from the central region is R₂, and the radius of curvature R₁ and the radius of curvature R₂ are connected to each other to form an interface disposed at a position corresponding to 40-60% of the maximum width of the main belt.

In the pneumatic radial tire for the airplane having the above construction, it is particularly preferable that the main belt includes organic fiber cords and the organic fiber cord has a tensile strength at break of not less than 6.3 cN/dtex and an elongation ratio of 0.2-2.0% when a load of 0.3 cN/dtex is applied in a stretching direction, an elongation ratio of 1.5-7.0% when a load of 2.1 cN/dtex is applied in a stretching direction and an elongation ratio of 2.2-9.3% when a load of 3.2 cN/dtex is applied in a stretching direction.

Also, it is preferable that the tread comprises land portions defined by a plurality of main grooves in a rotating direction of the tire and has a ground contacting face formed on a flat plate under a normal internal pressure and a normal load satisfying conditions of 0.8 ≤ B/A s 1.05 and 0.9 ≤ B₀/B₁ ≤ 1.1 when a length at the widthwise center of the tire is A and a length at a position corresponding to 84% of a ground contacting width is B and a length at a position corresponding to 88% of a ground contacting width is B₀ and a length at a widthwise innermost side of an outermost land portion is B₁ and B/A is a global rectangle ratio and B₀/B₁ is a local rectangle ratio, wherein the normal internal pressure and the normal load mean an internal pressure and a load defined in TRA standard.

According to the invention, the main belt has a lamination thickness gradually decreasing from a widthwise center of the tire toward an end portion thereof and satisfies a condition of 0.2 ≤ G₁/G₀ ≤ 0.8 when a lamination thickness at the widthwise center of the tire is Go and a lamination thickness at a position corresponding to 2/3 of a maximum width is G₁; and the tread satisfies a condition of 0.85 ≤ D_{S}/D_{C} s 1.1 when a tread thickness at a widthwise center position of the tire is D_{C} and a tread thickness at a position of a width corresponding to 80% of a maximum width of the main belt is D_{S}; and an outer surface of the tread formed by filling a normal internal pressure has a radius of curvature satisfying a condition of 0.4 ≤ R₂/R₁ ≤ 3.0 when a radius of curvature in a central region including the widthwise center of the tire is R₁ and a radius of curvature forming a widthwise side region outward from the central region is R₂, and the radius of curvature R₁ and the radius of curvature R₂ are connected to each other at a position corresponding to 40-60% of the maximum width of the main belt, so that the ground contacting length in the widthwise direction of the tire becomes approximately the same and the slippage of tread rubber at the shoulder rib becomes small (i.e. work volume due to wearing can be made small), and hence the uneven wear of the shoulder portion is suppressed.

The invention will be described in detail with reference to the accompanying drawings, wherein:
FIG. 1 is a right-half section view of a pneumatic radial tire for an airplane according to an embodiment of the invention;
FIG. 2 is a right-half section view of a pneumatic radial tire for an airplane according to an embodiment of the invention;
FIG. 3 is a schematic view illustrating a shape of a ground contacting face in a pneumatic radial tire for an airplane according to an embodiment of the invention; and
FIG. 4 is a schematic view illustrating a shape of a ground contacting face in a pneumatic radial tire for an airplane according to an embodiment of the invention.

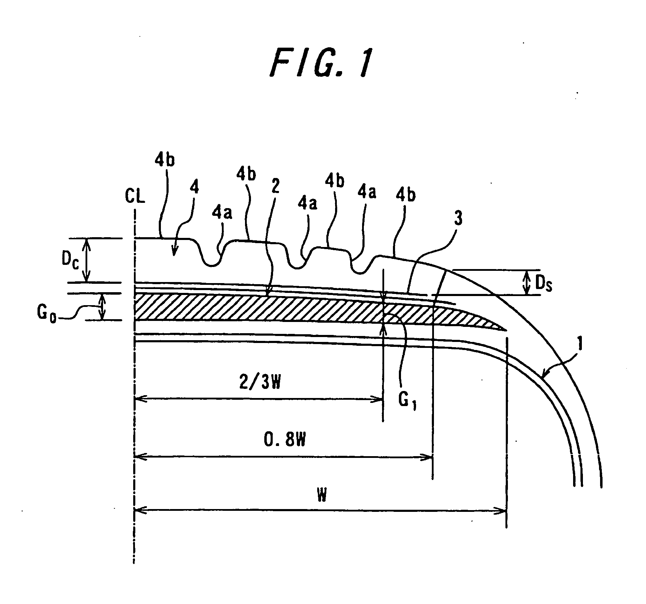

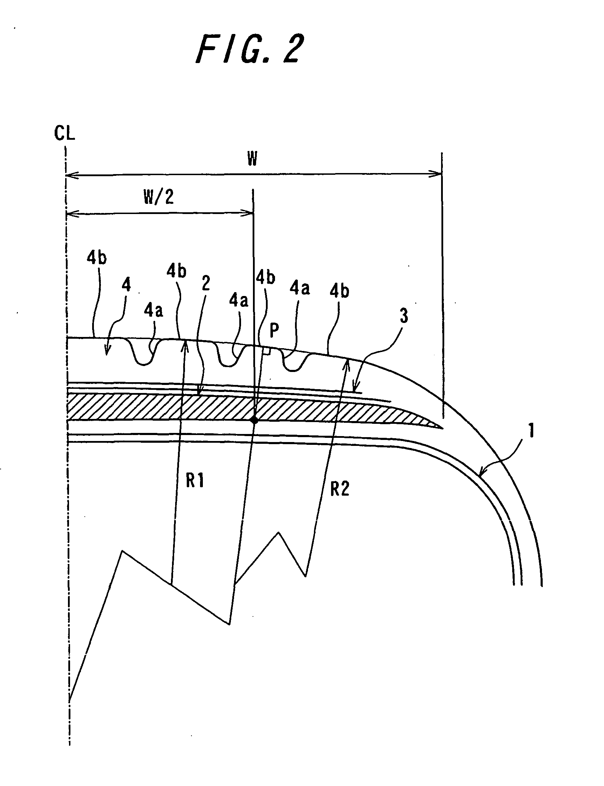

In FIGS. 1 and 2 is shown a right-half part of an embodiment of the pneumatic radial tire for an airplane according to the invention.

In these figures, numeral 1 is a carcass comprised of at least one carcass ply toroidally extending between a pair of bead cores (not shown), and numeral 2 is a main belt disposed on a radially outer peripheral face of a crown portion of the carcass 1. The main belt 2 is comprised of at least two belt layers formed by spirally winding rubberized inextensible high-rigidity cord(s) (Kevlar cord may be applied).

Also, numeral 3 is an auxiliary belt comprised of plural layers each being formed by bending a ribbon-shaped treat of rubberized nylon cords on a same plane in opposite directions between both ends and zigzag extending in a circumferential direction, and numeral 4 is a tread disposed on a radially outside of the auxiliary belt 3. The tread 4 is provided on its outer surface with a plurality of main grooves 4a formed in a rotating direction of the tire and defining plural land portions (ribs) 4b. The maximum width of the main belt 2 is W.

The main belt 2 has a lamination thickness gradually decreasing from a widthwise center of the tire toward an end portion thereof and satisfies a condition of 0.2 ≤ G₁/G₀ ≤ 0.8 when a lamination thickness at the widthwise center of the tire is Go and a lamination thickness at a position corresponding to 2/3 of a maximum width (width ranging from the widthwise center position of the tire to an end portion thereof) is G₁ as shown in FIG. 1.

Also, the tread 4 satisfies a condition of 0.85 ≤ D_{S}/D_{C} ≤ 1.1 when a tread thickness at a widthwise center position of the tire is D_{C} and a tread thickness at a position of a width corresponding to 80% of a maximum width of the main belt 2 is D_{S}, and the outer surface of the tread 4 formed by filling a normal internal pressure has a radius of curvature satisfying a condition of 0.4 ≤ R₂/R₁ ≤ 3.0 when a radius of curvature in a central region including the widthwise center of the tire is R₁ and a radius of curvature forming a widthwise side region outward from the central region is R₂, and the radius of curvature R₁ and the radius of curvature R₂ are connected to each other at a position corresponding to 40-60% of the maximum width of the main belt 2.

In the invention, the reason why the relation between the lamination thickness at the widthwise center of the tire (G₀) and the lamination thickness at a position corresponding to 2/3 of a maximum width (G₁) is 0.2 ≤ G₁/G₀ ≤ 0.8 is due to the fact that when G₁/G₀ is less than 0.2, an excessive tension is applied to the belt layer located in the vicinity of the shoulder portion and hence there is caused a fear of deteriorating the resistance to pressure, while when it exceeds 0.8, the belt layer located at the position corresponding to 2/3 of the maximum width is not effectively utilized, which may lead to increase the weight of the pneumatic radial tire.

Also, the reason why the relation between the tread thickness at a widthwise center position of the tire (D_{C}) and the tread thickness at a position of a width corresponding to 80% of a maximum width of the main belt (D_{S}) is limited to 0.85 ≤ D_{S}/D_{C} ≤ 1.1 is due to the fact that when D_{S}/D_{C} is less than 0.85, the ground contacting shape becomes not rectangular but becomes rounded, while when it exceeds 1.1, the ground contacting shape becomes butterfly type.

In the outer surface of the tread formed by filling a normal internal pressure, when the relation between the radius of curvature in a central region including the widthwise center of the tire (R₁) and the radius of curvature forming a widthwise side region outward from the central region (R₂) is 0.4 ≤ R₂/R₁ ≤ 3.0 and the radius of curvature R₁ and the radius of curvature R₂ are connected to each other at a position corresponding to 40-60% of the maximum width of the main belt, the adequate ground contacting shape can be obtained.

The radius of curvature (R₂) is smoothly connected to the radius of curvature (R₁) at a tangent point P located in a region corresponding to 40-60% of the maximum width of the main belt 2.

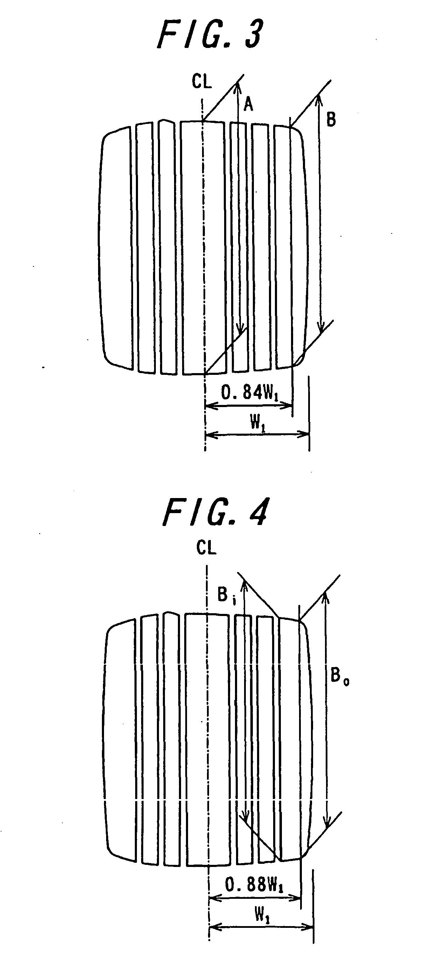

In FIGS. 3 and 4 is shown a shape of a ground contacting face on a flat plate under a normal internal pressure and a normal load with respect to the pneumatic radial tire for an airplane according to the invention, respectively.

In the invention, the reason why the relation among the length (A) at the widthwise center of the tire, the length (B) at a position corresponding to 84% of the ground contacting width (W₁), the length (B₀) at a position corresponding to 88% of the ground contacting width (W₁) and the length (B₁) at the widthwise innermost side of the outermost land portion is preferably 0.8 ≤ B/A s 1.05 and preferably 0.9 s B₀/B₁ ≤ 1.1 is due to the following reasons.

When B/A is less than 0.8, uneven wear can not be avoided, while when it exceeds 1.05, the heat generation in the shoulder portion becomes large and problems resulted therefrom are easily caused.

Also, when B₀/B₁ is less than 0.9, uneven wear (shoulder wear) is caused in the land portion (rib) at the shoulder region and hence the groove located at the shoulder region is worn prematurely (leading to premature exchange of tire), while when it exceeds 1.1, the heat generation becomes large in the rib at the shoulder region, and hence the tread is blown out in the takeoff test under a high loading and also the ground contacting pressure becomes too high to considerably promote wearing.

The main belt 2 may be constructed with organic fiber cords in which the organic fiber cord has a tensile strength at break of not less than 6.3 cN/dtex and an elongation ratio of 0.2-2.0% when a load of 0.3 cN/dtex is applied in a stretching direction, an elongation ratio of 1.5-7.0% when a load of 2.1 cN/dtex is applied in a stretching direction and an elongation ratio of 2.2-9.3% when a load of 3.2 cN/dtex is applied in a stretching direction. In this case, the suppression of the size growth to be targeted can be easily attained, whereby resistance to sticking of foreign matter is ensured and the hoop effect of the main belt 2 is optimized.

As the organic fiber cord used in the carcass ply constituting the carcass 1 and the organic fiber cord constituting the main belt 2 are applied aromatic polyamide fibers.

### Example

There are provided tires having a tire size of 1400X530R23 40PR and a structure shown in Table 1, respectively, which are then subjected to a high-speed durable test and also the wearing state at the rib in the shoulder region is examined. The results are shown in Table 1.

Moreover, a high-speed durable test is carried out by repeating a drum test, in which the running of the tire is accelerated to a speed of 380 km/h under a normal internal pressure and a normal load in about 1 minute, several ten times and the number of high-speed durable drum tests is represented by an index on the basis that a standard tire is 100. On the other hand, the wearing state at the rib in the shoulder region is evaluated by measuring a work volume due to wearing in the shoulder rib, and the measured value is represented as a coefficient of resistance to uneven wear by an index on the basis that the standard tire is 100. Further, the size growth of the tire is represented by a ratio of an outer diameter of the tire filled under a normal internal pressure to an outer diameter of the tire before the filling of the internal pressure (free state).

**Table 1**

| | | Acceptable Example | Comparative Example 1 | Comparative Example 2 | Comparative Example 3 | Standard tire |
|---|---|---|---|---|---|---|
| Carcass | ply number | 7 | 7 | 7 | 7 | 7 |
| | kind of cord | nylon | nylon | nylon | nylon | nylon |
| Auxiliary belt | type | zigzag | zigzag | zigzag | zigzag | zigzag |
| | kind of cord | nylon | nylon | nylon | nylon | nylon |
| | cord angle (°) | 80 | 80 | 80 | 80 | 80 |
| | number of layers | 2 | 2 | 2 | 2 | 2 |
| | belt width | 0.9 | 0.9 | 0.9 | 0.9 | 0.9 |
| Main belt | kind of cord | Kevlar | Kevlar | Kevlar | Kevlar | Kevlar |
| | belt shaping method | spiral | spiral | spiral | spiral | spiral |
| | belt structure | convex | convex | convex | convex | convex |
| G₁/G₀ | | 0.57 | 0.57 | 0.57 | 0.57 | 0.57 |
| D_{S}/D_{C} | | 0.90 | 0.90 | 0.82 | 1.14 | 0.90 |
| R₂/R₁ | | 1.2 | 3.4 | 0.56 | 0.56 | 0.35 |
| B/A (global rectangle ratio) | | 0.93 | 0.93 | 0.88 | 1.12 | 0.89 |
| B₀/B₁ (local rectangle ratio) | | 1.01 | 1.15 | 0.89 | 1.12 | 0.89 |
| Test items | size growth (%) | 1.5 | 1.5 | 1.5 | 1.5 | 1.5 |
| | number of high-speed durable drum tests (index) | 102 | 84 | 101 | 91 | 100 |
| | coefficient of resistance to uneven wear at shoulder rib (index) | 110 | 98 | 98 | 103 | 100 |

As seen from the results of Table 1 based on the standard tire, all of the size growth, durability and resistance to uneven wear are improved in the tire according to the invention (acceptable example) as compared with the tires of Comparative Examples 1-3.

According to the invention, there can be provided radial tires for airplanes having an improved resistance to uneven wear and a high durability.

## Claims

1. A pneumatic radial tire for an airplane comprising a pair of bead cores, a carcass (1) comprised of at least one carcass ply toroidally extending between the pair of the bead cores, a main belt (2) disposed on a radially outer peripheral face of a crown portion of the carcass and comprised of at least two belt layers each being formed by spirally winding a rubberized inextensible high-rigidity cord(s), an auxiliary belt (3) disposed radially outside of the main belt and comprised of plural layers each being formed by bending a ribbon-shaped treat of rubberized nylon cords on a same plane in opposite directions between both ends and zigzag extending in a circumferential direction, and a tread (4) disposed radially outside of the auxiliary belt, wherein the main belt has a lamination thickness gradually decreasing from a widthwise center of the tire toward an end portion thereof and satisfies a condition of 0.2 ≤ G₁/G₀ ≤ 0.8 when a lamination thickness at the widthwise center of the tire is G₀ and a lamination thickness at a position corresponding to 2/3 of a maximum width of one main belt is G₁; and
the tread satisfies a condition of 0.85 ≤ D_{S}/D_{C} ≤ 1.1 when a tread thickness at a widthwise center position of the tire is D_{C} and a tread thickness at a position of a width corresponding to 80% of a maximum width of the main belt is Ds; and **characterised in that**
an outer surface of the tread formed by filling a normal internal pressure has a radius of curvature satisfying a condition of 0.4 ≤ R₂/R₁ ≤ 3.0 when a radius of curvature in a central region including the widthwise center of the tire is R₁ and a radius of curvature forming a widthwise side region outward from the central region is R₂, and the radius of curvature R₁ and the radius of curvature R₂ are connected to each other to form an interface disposed at a position corresponding to 40-60% of the maximum width of the main belt.

2. A pneumatic radial tire for an airplane according to claim 1, wherein the main belt (2) includes organic fiber cords and the organic fiber cord has a tensile strength at break of not less than 6.3 cN/dtex and an elongation ratio of 0.2-2.0% when a load of 0.3 cN/dtex is applied in a stretching direction, an elongation ratio of 1.5-7.0% when a load of 2.1 cN/dtex is applied in a stretching direction and an elongation ratio of 2.2-9.3% when a load of 3.2 cN/dtex is applied in a stretching direction.

3. A pneumatic radial tire for an airplane according to claim 1 or 2, wherein the treat (4) comprises land portions (4b) defined by a plurality of main grooves (4a) in a rotating direction of the tire and has a ground contacting face formed on a flat plate under a normal internal pressure and a normal load satisfying conditions of 0.8 ≤ B/A ≤ 1.05 and 0.9 ≤ B₀/B₁ s 1.1 when a length at the widthwise center of the tire is A and a length at a position corresponding to 84% of a ground contacting width is B and a length at a position corresponding to 88% of a ground contacting width is B₀ and a length at a widthwise innermost side of an outermost land portion is B₁ and B/A is a global rectangle ratio and B₀/B₁ is a local rectangle ratio, wherein the normal internal pressure and the normal load mean an internal pressure and a load defined in TRA standard.

## Patentansprüche

1. Radialluftreifen für ein Flugzeug, der aufweist: ein Paar Wulstkerne; eine Karkasse (1), die mindestens eine Karkassenlage aufweist, die sich ringförmig zwischen dem Paar der Wulstkerne erstreckt; einen Hauptgürtel (2), der auf einer radial äußeren Umfangsfläche eines Zenitabschnittes der Karkasse angeordnet ist und mindestens zwei Gürtellagen aufweist, die jeweils durch spiralförmiges Wickeln eines gummierten undehnbaren Kordes (von Korden) hoher Steifigkeit gebildet werden; einen Hilfsgürtel (3), der radial außerhalb des Hauptgürtels angeordnet ist und mehrere Lagen aufweist, die jeweils durch Biegen einer bandförmigen Aufbereitung von gummierten Nylonkorden in einer gleichen Ebene in entgegengesetzten Richtungen zwischen beiden Enden und sich zickzackartig in einer Umfangsrichtung erstreckend gebildet werden; und eine Lauffläche (4), die radial außerhalb des Hilfsgürtels angeordnet ist, wobei der Hauptgürtel eine Laminierungsdicke aufweist, die nach und nach von einer Mitte des Reifens in der Breitenrichtung in Richtung eines Endabschnittes davon kleiner wird und eine Bedingung von 0,2 ≤ G₁/G₀ ≤ 0,8 erfüllt, wenn eine Laminierungsdicke in der Mitte des Reifens in der Breitenrichtung G₀ und eine Laminierungsdicke in einer Position entsprechend 2/3 einer maximalen Breite des Hauptgürtels G₁ ist; und
die Lauffläche eine Bedingung von 0,85 ≤ D_{S}/D_{C} ≤ 1,1 erfüllt, wenn eine Laufflächendicke in einer Mittelposition des Reifens in der Breitenrichtung D_{C} und eine Laufflächendicke in einer Position einer Breite entsprechend 80 % einer maximalen Breite des Hauptgürtels D_{S} ist; und **dadurch gekennzeichnet, dass**
eine Außenfläche der Lauffläche, die durch Füllen mit einem normalen Innendruck gebildet wird, einen Krümmungsradius aufweist, der eine Bedingung von 0,4 ≤ R₂/R₁ ≤ 3,0 erfüllt, wenn ein Krümmungsradius in einem mittleren Bereich, der die Mitte des Reifens in der Breitenrichtung umfasst, R₁ und ein Krümmungsradius, der einen Seitenbereich in der Breitenrichtung außerhalb vom mittleren Bereich bildet, R₂ ist, und der Krümmungsradius R₁ und der Krümmungsradius R₂ miteinander verbunden werden, um eine Verbindung zu bilden, die in einer Position angeordnet ist, die 40 bis 60 % der maximalen Breite des Hauptgürtels entspricht.

2. Radialluftreifen für ein Flugzeug nach Anspruch 1, bei dem der Hauptgürtel (2) organische Faserkorde umfasst und der organische Faserkord eine Reißfestigkeit von nicht weniger als 6,3 cN/dtex und ein Dehnungsverhältnis von 0,2 bis 2,0 %, wenn eine Last von 0,3 cN/dtex in einer Dehnungsrichtung angewandt wird, ein Dehnungsverhältnis von 1,5 bis 7,0 %, wenn eine Last von 2,1 cN/dtex in einer Dehnungsrichtung angewandt wird, und ein Dehnungsverhältnis von 2,2 bis 9,3 % aufweist, wenn eine Last von 3,2 cN/dtex in einer Dehnungsrichtung angewandt wird.

3. Radialluftreifen für ein Flugzeug nach Anspruch 1 oder 2, bei dem die Lauffläche (4) Stegabschnitte (4b) aufweist, die durch eine Vielzahl von Hauptrillen (4a) in einer Rotationsrichtung des Reifens definiert werden, und eine Reifenaufstandsfläche aufweist, die auf einer flachen Platte unter einem normalen Innendruck und einer normalen Last, die die Bedingungen von 0,8 ≤ B/A ≤ 1,05 und 0,9 ≤ B₀/B₁ ≤ 1,1 erfüllt, gebildet wird, wenn eine Länge in der Mitte des Reifens in der Breitenrichtung A und eine Länge in einer Position entsprechend 84 % der Reifenaufstandsbreite B ist, und eine Länge in einer Position entsprechend 88 % einer Reifenaufstandsbreite B₀ und eine Länge auf einer innersten Seite in der Breitenrichtung von einem äußersten Stegabschnitt B₁ ist und B/A ein umfassendes Rechteckverhältnis und B₀/B₁ ein lokales Rechteckverhältnis ist, wobei der normale Innendruck und die normale Last einen Innendruck und eine Last bedeuten, die im TRA-Standard definiert werden.

## Revendications

1. Bandage pneumatique radial pour un avion, comprenant une paire de tringles (1), une carcasse (1), comprenant au moins une nappe de carcasse s'étendant toroïdalement entre la paire de tringles, une ceinture principale (2), agencée sur une face périphérique radialement externe d'une partie de sommet de la carcasse et comprenant au moins deux couches de carcasse, formées chacune par enroulement en spirale d'un (de) câblé(s) caoutchouté(s) inextensible(s) à rigidité élevée, une ceinture auxiliaire (3) agencée radialement à l'extérieur de la ceinture principale, et comprenant plusieurs couches formées chacune par fléchissement d'une bande de roulement en forme de ruban de câblés de nylon caoutchoutés sur un même plan, dans des directions opposées, entre les deux extrémités, et s'étendant en zigzag dans une direction circonférentielle, et une bande de roulement (4) agencée radialement à l'extérieur de la ceinture auxiliaire, la ceinture principale ayant une épaisseur de stratification réduite progressivement, d'un centre dans le sens de la largeur du bandage pneumatique vers une partie d'extrémité de celui-ci, et satisfaisant une condition de 0,2 ≤ G₁/G₀ ≤ 0,8 lorsqu'une épaisseur de stratification au niveau du centre dans le sens de la largeur du bandage pneumatique correspond à G₀ et une épaisseur de stratification au niveau d'une position représentant 2/3 d'une largeur maximale de la ceinture principale correspondant à G₁ ; et
la bande de roulement satisfaisant une condition de 0,85 ≤Dₛ/D_{c} ≤ 1,1 lorsqu'une épaisseur de la bande de roulement au niveau d'une position centrale dans le sens de la largeur du bandage pneumatique correspond à D_{c}, une épaisseur de la bande de roulement au niveau d'une position d'une largeur représentant 80% d'une largeur maximale de la ceinture principale correspondant à Dₛ ; et **caractérisé en ce que**
une surface externe de la bande de roulement, formée en remplissant une pression interne normale, a un rayon de courbure satisfaisant une condition de 0,4 ≤ R₂/R₁ ≤ 3,0 lorsqu'un rayon de courbure dans une région centrale, englobant le centre dans le sens de la largeur du bandage pneumatique, correspond à R₁, un rayon de courbure formant une région latérale dans le sens de la largeur, hors de la région centrale, correspondant à R₂, le rayon de courbure R₁ et le rayon de courbure R₂ étant connectés l'un à l'autre pour former une interface agencée au niveau d'une position représentant 40 à 60% de la largeur maximale de la ceinture principale.

2. Bandage pneumatique radial pour un avion selon la revendication 1, dans lequel la ceinture principale (2) englobe des câblés de fibres organiques, le câblé de fibres organiques présentant une résistance à la rupture par traction non inférieure à 6,3 cN/dtex, et un rapport d'allongement compris entre 0,2 et 2,0% lors de l'application d'une charge de 0,3 cN/dtex dans une direction d'étirement, un rapport d'allongement compris entre 1,5 et 7,0% lors de l'application d'une charge de 2,1 cN/dtex dans une direction d'étirement, et un rapport d'allongement compris entre 2,2 et 9,3% lors de l'application d'une charge de 3,2 cN/dtex dans une direction d'étirement.

3. Bandage pneumatique radial pour un avion selon la revendication 1 ou 2, dans lequel la bande de roulement (4) comprend des parties d'appui (4b), définies par plusieurs rainures principales (4a) dans une direction de rotation du bandage pneumatique, et comporte une face de contact au sol formée sur une plaque plate en présence d'une pression interne normale et d'une charge normale satisfaisant les conditions de 0,8 ≤ B/A ≤ 1,5 et 0,9 ≤ B₀/B₁ ≤ 1,1 lorsqu'une longueur au niveau du centre de la largeur du bandage pneumatique correspond à A, une longueur au niveau d'une position représentant 84% d'une largeur de contact au sol correspondant à B, une longueur au niveau d'une position représentant 88% d'une largeur du contact au sol correspondant à B₀, et une longueur au niveau d'un côté le plus interne dans le sens de la largeur d'une partie d'appui la plus externe correspondant à B₁, B/A étant un rapport rectangulaire global et B₀/B₁ étant un rapport rectangulaire local, la pression interne normale et la charge normale correspondant à une pression interne et à une charge définie dans la norme TRA.
